# EUROPÄISCHE PATENTSCHRIFT

(11) **EP 0 579 624 B1**
(45) Veröffentlichungstag und Bekanntmachung des Hinweises auf die Patenterteilung: **05.06.1996**
(21) Anmeldenummer: 92906692.6
(22) Anmeldetag: 14.03.1992
(51) Int. Cl.: A01N 65/00, A01N 25/02, A01N 25/30

(54) **VERFAHREN ZUR HERSTELLUNG EINES LAGERFÄHIGEN AZADIRACHTINREICHEN INSEKTIZIDS AUS SAMENKERNEN DES NEEM-BAUMES**
PROCESS FOR PRODUCING A STORABLE AZADIRACHTIN-RICH INSECTICIDE FROM SEED KERNELS OF THE NEEM TREE
PROCEDE POUR LA FABRICATION D'UN INSECTICIDE RICHE EN AZADIRACHTINE, SUPPORTANT LE STOCKAGE, A BASE DE GRAINES DE L'ARBRE MARGOUSIER

(30) Priorität: 22.03.1991 DE 4109473
(43) Veröffentlichungstag der Anmeldung: 26.01.1994
(73) Patentinhaber: TRIFOLIO-M GMBH, HERSTELLUNG UND VERTRIEB HOCHREINER BIOSUBSTANZEN, D-35633 Lahnau (DE)
(72) Erfinder: KLEEBERG, Hubertus, D-6335 Lahnau 2 (DE)
(74) Vertreter: Missling, Arne, Dipl.-Ing.
(86) Internationale Anmeldenummer: DE9200220
(87) Internationale Veröffentlichungsnummer: WO9216109

(56) Entgegenhaltungen:
- EP-A- 0 405 291
- EP-A- 0 405 701
- EP-A- 0 436 257
- DE-A- 3 702 175
- US-A- 4 556 562
- US-A- 4 943 434
- STN International, File CA; Chemical Abstracts, Band 103, Nr. 25, 23 December 1985, (Columbus, Ohio, US) K.J. Feurerhake: "Effectiveness and selectivity of technical solvents for the extraction of neem seed components with insecticidal activity"
- STN International, File CA, Chemical Abstracts, Band 105, Nr. 3, 21 July 1986, (Columbus, Ohio, US), J. Meisner et al.: "The effect of various extracts of neem seed kernel on Liriomyza trifolii (Burgess) (Diptera: Agromyzidae)"
- STN International, File CA, Chemical Abstracts, Band 103, Nr. 23, 29 December 1985, (Columbus, Ohio, US) K.R.S. Ascher et al: "Neem seed kernel extracts as an inhibior of growth and fecundity in Spodoptera littoralis"
- STN International, File CA, Chemical Abstracts, Band 114, Nr. 19, 13 May 1991, (Columbus, Ohio, US) Paul B. Tanzubil et al: "Effects of
- azadirachtin and aqueous neem seed extracts on survival, growth and development of the African armyworm, Spodoptera exempta",

## Beschreibung

Die Erfindung betrifft ein Verfahren zur Herstellung eines lagerfähigen azadirachtinreichen Insektizids aus Bestandteilen insbesondere aus den Samenkernen des Neem-Baumes, bei dem zunächst die Bestandteile zerkleinert werden und den zerkleinerten Bestandteilen ein Lösungsmittel zugesetzt ist, das das Azadirachtin aus den Bestandteilen extrahiert, wobei im Anschluß hieran das Azadirachtin im Lösungsmittels angereichert wird.

Zahlreiche Untersuchungen haben zur Erkenntnis geführt, daß davon ausgegangen werden kann, daß unter den Inhaltstoffen der verschiedenen Teile - insbesondere der Früchte - des Neem-Baumes (Azadirachta indica A. Juss) solche mit optimalen Eigenschaften für einen umweltfreundlichen Pflanzenschutz enthalten sind. Azadirachtin gehört in diesem Zusammenhang zu den potentesten und in größeren Mengen (ca. 1 bis 20 g pro kg) in den Früchten des Neem-Baumes vorkommenden Substanzen.

Die Früchte des Neem-Baumes wurden bereits zur Herstellung eines Insektizids verwandt, z.B. mit einem Verfahren gemäß US-PS 4,556,562. Nach diesem Verfahren werden ethanollösliche Inhaltsstoffe mit diesem Alkohol bei 80 °C extrahiert.

Im Anschluß hieran wird der Alkohol abgedampft und der Rückstand mit einer Detergentien-Wassermischung formuliert. Bei diesem bekannten Extrationsverfahren wie auch bei anderen bekannten Extrationsverfahren, bei denen organische Lösungsmittel verwendet werden, muß zur Gewinnung eines festen Wirkstoffkonzentrates das Lösungsmittel abgedampft werden. Alle bekannten Verfahren, die ein ölarmes Produkt ergeben, erfordern zahlreiche arbeitsintensive Reinigungsschritte (Ausschütteln, Einengen) wobei ohne Anwendung noch aufwendigerer Trennverfahren wie beispielsweise chromatographischer Methoden, die Azadirachtingehalte des Produktes nur zwischen wenigen bis zu etwa 35 % liegen.

Schwierigkeiten bereitet insbesondere die wirtschaftliche Abtrennung des störenden Öls. Dieses Öl wird gemäß den derzeit bekannten Extraktionsmethoden entweder vor oder nach der Isolierung der azadirachtinreichen Inhaltsstoffe abgetrennt.

Das Öl kann z.B. durch Extration mit Kohlenwasserstoffen (z.B. Petroläther, Hexan) oder durch Pressen aus den gemahlenen Neem-Kernen entfernt werden. Insbesondere beim Pressen tritt eine Temperaturerhöhung des Neem-Materials ein, welche zu einer mehr oder weniger starken Zersetzung des Azadirachtins führt und damit die spätere Ausbeute an Wirkstoff erheblich verringert.

Der durch die Extraktion der gemahlenen Neem-Kerne mit organischen Lösungsmitteln wie Alkoholen, Ketonen oder halogenierten Kohlenwasserstoffen erhaltene Rohextrakt wird häufig nach der Überführung in ein mit Wasser mischbares Lösungsmittel durch Ausschütteln mit Kohlenwasserstoffen (z.B. Petroläther, Hexan) von Öl befreit. Der Nachteil dieses Verfahrens besteht darin, daß ein Teil des Wirkstoffes in die Ölphase gelangt und somit den Ertrag mindert.

Zur Isolierung des azadirachtinhaltigen Wirkstoffes ist es des weiteren bekannt einen wäßrigen Extrakt der Neem-Kerne zu verwenden, dem der Wirkstoff mit Methyl-t-Butylether entzogen wird. Im Anschluß hieran wird der Methyl-t-Butylether abgedampft und der Rückstand wird in Methanol aufgenommen. Im Anschluß wird dieser mit Petrolether ausgeschüttelt und eingeengt. Durch diese Maßnahme erhält man eine Ausbringung von 0,8 % bezogen auf die Neem-Kerne eines biologisch aktiven Produktes. Ein derartiges Verfahren ist wirtschaftlich nicht einsetzbar.

Der Erfindung liegt die Aufgabe zugrunde ein wirtschaftliches und damit preiswertes Verfahren vorzuschlagen, das technisch einfach ist und eine hohe Ausbringung von azadirachtinhaltigem Insektizid ermöglicht, wobei das erhaltene Insektizid weitgehend frei von Öl ist.

Diese Aufgabe wird mit den Merkmalen des Anspruches 1 gelöst.

Gemäß der Erfindung werden die Neem-Kerne vorteilhaft zunächst zerkleinert, wobei als Lösungsmittel Wasser zugesetzt wird. Diese Extraktion des Azadirachtins aus den Kernen kann mehrfach mit frischem Wasser wiederholt werden, bis der Wirkstoff bis zu 90 % aus dem Mahlgut entfernt ist. Im Anschluß hieran muß der Wirkstoff aus dem Wasser extrahiert werden, was auf zwei Arten geschehen kann.

Zum einen wird dem Wasser, welches den Wirkstoff enthält, ein nicht vollständig mit Wasser mischbares organisches Lösungsmittel zugesetzt, welches eine größere Löslichkeit für das Azadirachtin hat als das Wasser selbst. Nach erfolgter Durchmischung und Aufnahme des Azadirachtins durch das organische Lösungsmittel erfolgt eine Ruhephase, in der eine Phasentrennung eintritt. Diese Art der Gewinnung des Azadirachtins in zunächst wäßriger Lösung hat den Vorteil, daß störendes Öl nicht in der azadirachtin reichen Phase anfällt und somit nicht mehr mühselig aus dieser entfernt werden muß. Im Anschluß daran wird die das Azadirachtin enthaltende Lösung eingeengt, worauf dann das Konzentrat in die 1 bis 20-fachen Volumenmenge eines flüssigen Kohlenwasserstoffes eingegeben und mit diesem verrührt wird. Als Produkt erhält man einen sich am Boden abscheidenden azadirachtinreichen Niederschlag, der entnommen und getrocknet werden kann. Mit diesem Verfahren wird ein fester Wirkstoff mit großer Lagerfähigkeit erhalten.

Gemäß dem zweiten Weg des erfindungsgemäßen Verfahrens wird dem das Azadirachtin enthaltene Wasser ein Tensid mit einer Trübungstemperatur zugegeben, die vorteilhaft zwischen 20 und 80 °C liegt. Dieses Tensid hat wiederum eine höhere Löslichkeit für das Azadirachtin als das Wasser, so daß nach Temperaturerhöhung über die Trübungstemperatur und der dadurch bedingten Phasentrennung die azadirachtinreiche Phase abgetrennt werden kann. Der so erhaltene Wirkstoff kann entweder unmittelbar eingesetzt werden oder aber auch für eine weitere Lagerung eingeengt werden.

Die auf dem ersten oder zweiten Weg gewonnen Wirkstoffkonzentrate können vorteilhaft mit Tensiden formuliert werden, wobei vorteilhaft Polyäthylenoxidderivate, wie sie auch zur Extraktion eingesetzt werden, verwendet werden.

Das erfindungsgemäße Verfahren wird nachstehend anhand mehrerer Beispiele näher erläutert.

Beide im folgenden beschriebene Verfahren basieren auf der Anwendung von Wasser als primärem Extraktionsmittel. Hierzu werden die Samenkerne der getrockneten Neem-Früchte (beispielsweise unter Verwendung eines Fleischwolfes mit einer Scheibe deren Löcher Durchmesser von etwa 3 bis 8 mm besitzen) gemahlen. Das erhaltene Mahlgut wird sodann in die etwa 5 bis 20-fache Menge (optimal so, daß die Mahlgutphase ca. 30 bis 50 % des Gesamtansatzes beträgt; bei Sedimentation entspricht das ca. der 6 bis 10-fachen Menge Wasser, beispielsweise bei Zentrifugation nur etwa einem Wasserzusatz der 2 bis 5-fachen Mahlgutmenge) Wasser bei Raumtemperatur (ca. 20 °C) eingerührt, während 3 bis etwa 12 Stunden (oder mehr - das Gleichgewicht der Verteilung von Azadirachtin zwischen Mahlgut und Wasser ist nach etwa 5 Stunden weitgehend erreicht - Temperaturerhöhung bis 70 °C beschleunigt die Gleichgewichtseinstellung etwas) mehrfach gerührt (ca. alle 30 Minuten) und dann zur Sedimentation für 1 bis 3 Stunden stehen gelassen. Die Trennung der wäßrigen Phase vom Bodensatz kann durch verschiedene physikalische Maßnahmen wie Filtration, Sedimentation, Zentrifugation erfolgen. Nach dieser Zeit bildet sich ein aus den nicht gelösten Resten der Neem-Kerne bestehender Bodensatz, von dem die leicht trübe wässrige Lösung abgetrennt wird.

Zur Erhöhung der Ausbeute kann die Extraktion mit frischem Wasser und dem Bodensatz wiederholt werden. Im allgemeinen befinden sich nach 2 bis 3 Extraktionen etwa 90 % des vorhandenen Azadirachtrin in der wäßrigen Phase. Die wäßrige Phasen (Wasserextrakt) können zur weiteren Verarbeitung vereinigt werden.

### Lösungsmittelextraktion

Dem Wasserextrakt wird ein mit Wasser nicht vollständig mischbares organisches Lösungsmittel z.B. Ketone (wie Butanon, Pentanon, Hexanon), Alkohole (wie 1-Butanol, Pentanol), Ester (wie Essigsäureethylester, Essigsäure-n-butylester) oder halogenierte Kohlenwasserstoffe (wie Dichlormethan, Trichlormethan) etwa im Verhältnis Lösungsmittel : Wasser ≈ 1 : 10 unter Durchmischung zugesetzt und dann mehrere Stunden stehen gelassen, bis sich die nicht mischbaren Phasen getrennt haben (ca. 5 bis 24 Stunden). Die organische Phase wird abgetrennt und auf ca. 1/5 bis 1/10 des Volumens eingeengt. Das erhaltene Konzentrat wird langsam in das 5 bis 20-fache Volumen an flüssigen Kohlenwasserstoffen wie Hexan, Petrolether eingerührt, worauf sich ein weißer bis gelblicher Niederschlag bildet. Nach einigen Minuten hat sich der Niederschlag am Gefäßboden gesammelt, so daß die unpolare organische Lösung leicht abgegossen werden kann. Nach Trocknen des Niederschlages beträgt der Azadirachtingehalt etwa 30 bis 60 % mit einer Ausbeute von 80 bis 95 % in Bezug auf den Azadirachtingehalt der verwendeten Neem-Kerne. Die insektizide Aktivität des Produktes kommt derjenigen des reinen Azadirachtin praktisch gleich, da auch die anderen vorhandenen Inhaltsstoffe - vermutlich - insektizid wirken.

### Extraktion mittels Tensiden

Der Wasserextrakt wird bei Raumtemperatur mit etwa 1 bis 10% (optimal sind ca. 4 %) eines Tensids mit Trübungstemperatur zwischen etwa 20 und 80 °C (wie p-tertiär-Octylphenol-7,5-glykolether, p-tertiär-Octylphenol-8-10-glykolether, Ölsäure-amidheptaglykolether, Dodecylalkoholheptaglykolether, p-Iso-nonylphenoldekaglykolether) gemischt und auf eine Temperatur, die um einige Grade - etwa 5° - oberhalb der Trübungstemperatur liegt, erwärmt. Die nach kurzem Stehen gebildete tensid- und azadirachtinreiche (untere) Phase wird abgetrennt und kann direkt als Pflanzenschutzmittelkonzentrat verwendet werden.

### Beispiel 1:

### Extraktion mittels Essigsäureethylester

1 kg Neem-Kerne werden unter Verwendung eines Fleischwolfes, mit einer Vorsatzscheibe deren Löcher einen Durchmesser von etwa 4 mm besitzen, gemahlen und in 2,5 l Wasser mit einer Temperatur von 30 °C eingerührt. Nach 10 stündigem Stehen wird die wäßrige Phase vom Mahlgutrückstand abgegossen. Der Mahlgutrückstand wird zur weiteren Entfernung der wäßrigen Phase durch ein Leinentuch gepreßt. Die gesamte erhaltene wäßrige Phase (1,9 l) wird mit 250 ml Essigsäureethylester gemischt und im Schütteltrichter bei Raumtemperatur 6 Stunden stehen gelassen. Nach dieser Zeit wird die obere, esterreiche Phase (ca. 150 ml) abgetrennt, zur wäßrigen Phase 200 ml Essigsäureethyleser zugegeben und wieder gemischt. Nach Abnahme der Esterphase nach ca. 4 Stunden wird die Extraktion mit 200 ml Ester wiederholt. Die drei Esterphasen (insgesamt ca. 500 ml) werden vereinigt und im Vakuum bei ca. 45 °C auf 1/10 ihres Volumens eingeengt. Der Destillationsrückstand wird noch warm langsam in 400 ml Petrolether eingerührt, wobei der azadirachtinhaltige Wirkstoff ausfällt und sich nach ca. 30 Minuten vollständig am Boden abgesetzt hat. Die flüssige Phase wird abgeschüttet, der Niederschlag in ca. 20 ml frischen Petrolether aufgenommen, zentrifugiert und der Petrolether vom Niederschlag abgeschüttet. Nach Trocknung des Niederschlages für 12 Stunden bei 30 °C werden 4,61 g eines leicht gelblichen Pulvers erhalten, dessen Azadirachtingehalt nach HPLC-Analyse 44 % beträgt.

Bei zweimaliger Wiederholung der Wasserextraktion des Mahlgutrückstandes mit Essigsäureethylester werden noch 0,87 g und 0,58 g pulverförmiges Rohazadirachtin mit Azadirachtingehalten von 35 und 41 % erhalten. Insgesamt ergab diese Extraktion also 6,06 g gelbliches Pulver bei einer Azadirachtinmenge von 2,6 g. Die Analyse des Azadirachtingehaltes der Neem-Kerne von denen ausgegangen wurde ergibt 2,9 g Azadirachtin/kg Kerne. Die Gesamtausbeute an Azadirachtin beträgt also 90 %.

### Beispiel 2:

### Extraktion mit Tensiden

5 kg Neem-Kerne werden unter Verwendung eines Fleischwolfes, mit einer Vorsatzscheibe deren Löcher einen Durchmesser von etwa 6 mm besitzen, gemahlen und in 70 l Wasser mit einer Temperatur von 20 °C eingerührt. Nach 10 stündigem Stehen wird die obere, wäßrige Phase (45 l) vom Mahlgutrückstand (35 l) abgetrennt und in einem 60 l Faß mit Auslauf unten mit 1,45 l p-tertiär-Octylphenol-7,5-glykolether bei 18 ° C gut durchmischt.

Mittels eines an einem auf 75 °C eingestellten Umwälzthermostaten angeschlossenen PVC-Schlauches (15 m Länge, 2 cm äußerer Durchmesser), der in das 60 l Faß gewickelt ist, wird der tensidhaltige Wasserextrakt innerhalb von 3 Stunden auf 63 °C erwärmt, wobei sich schon bald eine tensidreiche Phase am Faßboden abscheidet, die ca. alle 30 Minuten durchgerührt wird. Bei erreichen einer Temperatur von 63 °C wird die Lösung noch ca. 30 Minuten stehen gelassen und sodann die untere Phase (5,5 l) abgelassen. Der Azadirachtingehalt der oberen und unteren Phase beträgt 2,7 bzw. 5,4 g. Für die tensidreiche Phase entspricht dies einer Azadirachtinkonzentration von 1 g Azadirachtin/l. Diese Lösung kann beispielsweise nach Verdünnung mit Wasser im Verhältnis 1 : 50 direkt als Pflanzenschutzmittel eingesetzt werden. Durch Wiederholung der Phasentrennung mit frischem Tensid oder Erhöhung der anfänglichen Tensidkonzentration kann die Ausbeute gesteigert werden.

Für dieses Verfahren ist es sinnvoll die Trübungstemperatur in einem möglichst weiten Temperaturbereich einstellen zu können. Dies ist beispielsweise möglich bei Verwendung von Mischungen verschiedener Tenside (wie p-tertiär-Octylphenol-7,5-glykolether und p-tertiär-Octylphenol-8-10-glykolether; für diese beiden Substanzen wird ein nahezu linearer Zusammenhang zwischen der Trübungstemperatur und der Massenzusammensetzung der beiden Tenside gefunden).

Zusammenfassend ist festzuhalten:
Ausführliche Wirksamkeitsuntersuchungen (bezogen auf den Azadirachtingehalt) zeigen, daß die biologische Aktivität der gemäß dem erfindungsgemäßen Verfahren gewonnenen Wirkstoffe, derjenigen des reinen Azadirachtin etwa gleich kommt.

Die beschriebenen Verfahren haben den Vorteil, daß sie mit einem Minimum an Extraktionsschritten und wenigen organischen Lösungsmitteln auskommen und dabei der Ölgehalt der Produkte trotzdem vernachlässigbar ist. Aus den bei diesen Verfahren anfallenden Rückständen kann nach Wunsch das Neem-Öl leicht nach bekannten Verfahren extrahiert werden.

Die beschriebenen Verfahren stellen eine sehr einfache und wirtschaftliche Möglichkeit da, ein botanisches, umweltfreundliches Insektizid herzustellen.

## Patentansprüche

1. Verfahren zur Herstellung eines lagerfähigen azadirachtinreichen Insektizids aus Bestandteilen insbesondere aus den Samenkernen des Neem-Baumes, bei dem gegebenenfalls zunächst die Bestandteile zerkleinert werden und den Bestandteilen ein Lösungsmittel zugesetzt wird, das das Azadirachtin aus den Bestandteilen extrahiert, wobei im Anschluß hieran das Azadirachtin im Lösungsmittel angereichert ist, dadurch gekennzeichnet, daß als Lösungsmittel Wasser verwendet wird, daß die Trennung der festen weitgehend vom Azadirachtin befreiten Bestandteile durch Filtration, Sedimentation, Zentrifugation etc. erfolgt und daß dann entweder
a) dem das Azadirachtin enthaltende Wasserextrakt ein mit Wasser nicht vollständig mischbares organisches Lösungsmittel zugesetzt wird, das eine größere Löslichkeit für das Azadirachtin als das Wasser hat, daß im Anschluß hieran nach erfolgter Phasentrennung das organische, das Azadirachtin enthaltende Lösungsmittel vom Wasser getrennt wird und daß anschließend die azadirachtinhaitige Lösung konzentriert wird und daß das gewonnene Konzentrat in flüssigen Kohlenwasserstoff von 1 bis 20-fachem Volumen eingegeben und mit diesem vermischt wird, wobei sich dann der sich bildende Azadirachtin enthaltende Niederschlag absetzt und abgetrennt wird, oder
b) daß dem das Azadirachtin enthaltende Wasserextrakt ein Tensid mit einer Trübungstemperatur, vorteilhaft zwischen 20 und 80 °C, zugesetzt und mit diesem gemischt wird, daß im Anschluß hieran die Mischung auf eine Temperatur erwärmt wird, die etwas oberhalb der Trübungstemperatur liegt und daß nach erfolgter Phasentrennung die azadirachtinreiche Tensidphase abgetrennt wird.

2. Verfahren nach Anspruch 1, dadurch gekennzeichnet, daß die Samenkerne auf Größen zwischen 100 µm und 2 mm zerkleinert werden.

3. Verfahren nach Anspruch 1 oder 2, dadurch gekennzeichnet, daß die Zerkleinerung mittels eines Fleischwolfes mit einer Scheibe erfolgt, deren Lochdurchmesser etwa 3 bis 8 mm beträgt.

4. Verfahren nach einem der Ansprüche 1 bis 3, dadurch gekennzeichnet, daß das erhaltene Mahlgut mit etwa der 1 bis 20-fachen Menge an Wasser angesetzt wird.

5. Verfahren nach Anspruch 4, dadurch gekennzeichnet, daß dem Wasser bei ca. 20 °C das Mahlgut zugegeben wird.

6. Verfahren nach Anspruch 5, dadurch gekennzeichnet, daß die Wasserextraktion über einen Zeitraum von ca. 5 Stunden erfolgt, wobei gleichzeitig die Temperatur der Wasserlösung auf bis zu 70 °C erhöht wird.

7. Verfahren nach Anspruch 6, dadurch gekennzeichnet, daß die Wasserlösung in Abständen von ca. 30 Minuten umgerührt und danach für die Sedimentation ca. 1 bis 3 Stunden stehengelassen wird.

8. Verfahren nach einem der Ansprüche 1 bis 7, dadurch gekennzeichnet, daß die Extraktion mit frischem Wasser und dem Bodensatz so lange wiederholt wird, bis etwa 90 % des Azadirachtins in die wäßrige Phase gelangt ist.

9. Verfahren nach einem der vorhergenenden Ansprüche, dadurch gekennzeichnet, daß als organisches Lösungsmittel Ketone (wie Butanon, Pentanon, Hexanon), Alkohole (wie 1-Butanol, Pentanol), Ester (wie Essigsäureethylester, Essigsäure-n-butylester) oder halogenierte Kohlenwasserstoffe (wie Dichlormethan, Trichlormethan) verwendet werden.

10. Verfahren nach einem der Ansprüche 1 bis 9, dadurch gekennzeichnet, daß das Verhältnis von Lösungsmittel zu Wasser etwa 1 : 10 beträgt.

11. Verfahren nach einem der Ansprüche 1 bis 10, dadurch gekennzeichnet, daß das organische Lösungsmittel unter Rühren zugesetzt wird und dann mehrere Stunden stehengelassen wird, bis sich die nichtmischbaren Phasen getrennt haben.

12. Verfahren nach einem der Ansprüche 10 oder 11, dadurch gekennzeichnet, daß die organische Phase abgetrennt und auf ca. 1/5 bis 1/10 ihres Volumens eingeengt wird, und daß das so erhaltene Konzentrat in das 1 bis 20-fache Volumen an flüssigen Kohlenwasserstoffen, wie Hexan, Petrolether eingerührt wird und daß der erhaltene Niederschlag von der unpolaren Lösung beispielsweise durch Abgießen getrennt und der azadirachtinreiche Niederschlag getrocknet wird.

13. Verfahren nach einem der Ansprüche 1 bis 12, dadurch gekennzeichnet, daß das getrocknete Azadirachtin in pulverform oder aber nach Formulierung mit Tensiden als Insektizid eingesetzt wird.

14. Verfahren nach einem der Ansprüche 1 bis 8, dadurch gekennzeichnet, daß als Tensid ein p-tertiär-Octylphenol-7,5-glykolether, p-tertiär-Octylphenol-8-10-glykolether, Ölsäure-amidheptaglykolether, Dodecylalkoholheptaglykolether, p-Iso-nonylphenoldekaglykolether verwendet wird.

15. Verfahren nach einem der Anspruch 1 bis 8 und 14, dadurch gekennzeichnet, daß die Wassertensidmischung auf eine Temperatur von etwa 5 °C oberhalb der Trübungstemperatur einer reinen Wasser-Tensid-Mischung erwärmt wird und daß die sich nach einer gewissen Zeit bildende tensid- und azadirachtinreiche Phase abgetrennt wird.

16. Verfahren nach einem der Ansprüche 1 bis 15, dadurch gekennzeichnet, daß die azadirachtinreiche Mischung durch Zusatz von Tensiden oder Wasser formuliert wird.

17. Verfahren nach Anspruch 16, dadurch gekennzeichnet, daß der azadirachtinreichen Tensidmischung Wasser im Verhältnis 1 : 500 bis 1 : 5000 zugesetzt wird.

18. Verfahren nach einem der Ansprüche 1 bis 8 oder 14 bis 17, dadurch gekennzeichnet, daß eine Tensidmischung aus p-tertiär-Octylphenol-7,5-glykolether und p-tertiär-Octylphenol-8-10-glykolether verwendet wird, die es gestattet die Trübungstemperatur in einem weiteren Bereich einzustellen.

## Claims

1. A process for producing a storable azadirachtin-rich insecticide from constituents, in particular from the seed kernels of the neem tree, in which first of all the constituents are optionally comminuted and a solvent which extracts the azadirachtin from the constituents is added to the said constituents, wherein the azadirachtin is subsequently enriched in the solvent, **characterized in that** water is used as a solvent, the solid constituents substantially freed from azadirachtin are separated by filtration, sedimentation, centrifugation *etc*., and then either
a) the water extract containing the azadirachtin has added thereto an organic solvent which is not completely miscible with water and which has a greater solubility for the azadirachtin than the water, after that the organic solvent containing the azadirachtin is separated from the water after the phase separation has taken place, and then the solution containing azadirachtin is concentrated and the concentrate obtained is introduced into liquid hydrocarbon from a 1-fold to a 20-fold volume and is mixed therewith, wherein the precipitate formed and containing azadirachtin is deposited and is separated, or
b) a surfactant with a cloud point, advantageously between 20 and 80°C, is added to the water extract containing the azadirachtin and is mixed therewith, after that the mixture is heated to a temperature which is slightly above the cloud point, and after the phase separation has taken place the azadirachtin-rich surfactant phase is separated.

2. A process according to Claim 1, **characterized in that** the seed kernels are comminuted to sizes of between 100 µm and 2 mm.

3. A process according to Claim 1 or 2, **characterized in that** the comminution is performed by means of a meat-mincing machine with a plate, the diameter of whose perforations amounts to approximately 3 to 8 mm.

4. A process according to one of Claims 1 to 3, **characterized in that** the ground material obtained is added in an approximately 1- to 20-fold quantity to water.

5. A process according to Claim 4, **characterized in that** the ground material is added to the water at approximately 20°C.

6. A process according to Claim 5, **characterized in that** the water extraction is performed over a period of approximately 5 hours, wherein the temperature of the water solution is increased to 70°C at the same time.

7. A process according to Claim 6, **characterized in that** the water solution is stirred at intervals of approximately 30 minutes and after that is allowed to stand for approximately 1 to 3 hours for sedimentation.

8. A process according to one of Claims 1 to 7, **characterized in that** the extraction is repeated with fresh water and the sediment until approximately 90% of the azadirachtin has passed into the aqueous phase.

9. A process according to one of the preceding Claims, **characterized in that** ketones (such as butanone, pentanone, hexanone), alcohols (such as 1-butanol, pentanol), esters (such as acetic acid ethyl ester, acetic acid n-butyl ester) or halogenated hydrocarbons (such as dichloromethane, trichloromethane) are used as an organic solvent.

10. A process according to one of Claims 1 to 9, **characterized in that** the ratio of solvent to water is approximately 1 : 10.

11. A process according to one of Claims 1 to 10, **characterized in that** the organic solvent is added during stirring and is then allowed to stand for several hours, until the immiscible phases have been separated.

12. A process according to one of Claims 10 or 12, **characterized in that** the organic phase is separated and is concentrated to approximately 1/5 to 1/10 of its volume, and the concentrate obtained in this way is stirred into the 1- to 20-fold volume of liquid hydrocarbons, such as hexane, petroleum ether, and the precipitate obtained is separated from the homopolar solution by decanting for example and the azadirachtin-rich precipitate is dried.

13. A process according to one of Claims 1 to 12, **characterized in that** the dried azadirachtin is used as an insecticide in a powdered form or after formulation with surfactants.

14. A process according to one of Claims 1 to 8, **characterized in that** a p-tertiary octyl phenol-7,5-glycol ether, p-tertiary octyl phenol-8-10-glycol ether, oleic acid amide heptaglycol ether, dodecyl alcohol heptaglycol ether, p-iso-nonyl phenol decaglycol ether is used as a surfactant.

15. A process according to one of Claims 1 to 8 and 14, **characterized in that** the water/surfactant mixture is heated to a temperature of approximately 5°C above the cloud point of a pure water / surfactant mixture, and the surfactant and azadirachtin-rich phase which is formed after a certain time is separated.

16. A process according to one of Claims 1 to 15, **characterized in that** the azadirachtin-rich mixture is formulated by the addition of surfactants or water.

17. A process according to Claim 16, **characterized in that** the azadirachtin-rich surfactant has water added thereto in a ratio of from 1 : 500 to 1 : 5000.

18. A process according to one of Claims 1 to 8 or 14 to 17, **characterized in that** a surfactant mixture of p-tertiary octyl phenol-7,5-glycol ether and p-tertiary octyl phenol-8-10-glycol ether is used, which allows the cloud point to be set within a wide range.

## Revendications

1. Procédé de préparation d'un insecticide riche en azadirachtine, apte au stockage, à partir de constituants provenant en particulier des graines de margousier, dans lequel, éventuellement, on broie d'abord les constituants et on y ajoute un solvant qui extrait l'azadirachtine desdits constituants, et, directement après cela, l'azadirachtine est concentrée dans le solvant,
caractérisé en ce qu'on utilise de l'eau comme solvant,
en ce qu'on effectue la séparation des constituants solides, amplement débarrassés de l'azadirachtine, par filtration, sédimentation, centrifugation, etc., et en ce que :
a) on ajoute à l'extrait aqueux contenant l'azadirachtine, un solvant organique pas complètement miscible, dont le pouvoir de dissolution de l'azadirachtine est plus grand que celui de l'eau, directement après cela, quand la séparation des phases est terminée, on sépare l'eau du solvant organique contenant l'azadirachtine et, ensuite, on concentre la solution contenant l'azadirachtine, on introduit le concentré obtenu dans 1 à 20 volumes d'hydrocarbure liquide et on le mélange avec celui-ci, après quoi le précipité qui se forme, contenant l'azadirachtine, se dépose et est séparé, ou
b) on ajoute à l'extrait aqueux contenant l'azadirachtine, un agent tensio-actif ayant une température de trouble comprise, de préférence, entre 20 et 80°C, et on le mélange avec celui-ci, directement après cela on chauffe le mélange à une température située légèrement au-dessus de la température de trouble, et, quand la séparation des phases est terminée, on sépare la phase d'agent tensio-actif riche en azadirachtine.

2. Procédé selon la revendication 1, caractérisé en ce qu'on broie les graines à des dimensions comprises entre 100 µm et 2 mm.

3. Procédé selon la revendication 1 ou 2, caractérisé en ce qu'on effectue le broyage au moyen d'un hache-viande pourvu d'une plaque dont les trous ont un diamètre d'environ 3 à 8 mm.

4. Procédé selon l'une des revendications 1 à 3, caractérisé en ce qu'on ajoute au produit broyé obtenu, environ 1 à 20 fois sa quantité en eau.

5. Procédé selon la revendication 4, caractérisé en ce qu'on ajoute l'eau au produit broyé à environ 20°C.

6. Procédé selon la revendication 5, caractérisé en ce qu'on effectue l'extraction avec de l'eau en l'espace d'environ 5 heures, et, pendant le même temps, on augmente la température de la solution aqueuse jusqu'à environ 70°C.

7. Procédé selon la revendication 6, caractérisé en ce qu'on agite la solution aqueuse à des intervalles d'environ 30 minutes, et, ensuite, on la laisse reposer pendant environ 1 à 3 heures pour effectuer la sédimentation.

8. Procédé selon l'une des revendications 1 à 7, caractérisé en ce qu'on recommence l'extraction avec de l'eau fraîche et le sédiment jusqu'à ce qu'environ 90 % de l'azadirachtine soient parvenus dans la phase aqueuse.

9. Procédé selon l'une des revendications précédentes, caractérisé en ce qu'on utilise, comme solvant organique, des cétones (comme la butanone, la pentanone, l'hexanone), des alcools (comme le 1-butanol, le pentanol), des esters (comme l'ester éthylique de l'acide acétique, l'ester n-butylique de l'acide acétique) ou des hydrocarbures halogénés (comme le dichlorométhane, le trichlorométhane).

10. Procédé selon l'une des revendications 1 à 9, caractérisé en ce que le rapport du solvant à l'eau est d'environ 1 : 10.

11. Procédé selon l'une des revendications 1 à 10, caractérisé en ce qu'on ajoute le solvant tout en agitant le mélange et, ensuite, on laisse reposer le mélange résultant jusqu'à ce que les phases non miscibles se soient séparées.

12. Procédé selon la revendication 10 ou 11, caractérisé en ce qu'on sépare la phase organique et on la concentre à environ 1/5ème à 1/10ème de son volume, et qu'on délaie le concentré ainsi obtenu dans 1 à 20 volumes d'hydrocarbures liquides, comme l'hexane ou l'éther de pétrole, on sépare le précipité ainsi obtenu de la phase non polaire, par exemple par déversement, et on sèche le précipité riche en azadirachtine.

13. Procédé selon l'une des revendications 1 à 12, caractérisé en ce qu'on utilise l'azadirachtine séchée comme un insecticide, sous une forme pulvérulente ou après l'avoir formulée avec des agents tensio-actifs.

14. Procédé selon l'une des revendications 1 à 8, caractérisé en ce qu'on utilise, comme agent tensio-actif, un p-tert-octylphénol-7,5-glycoléther , un p-tert-octylphényl-8-10-glycoléther , un acide oléiqueamidoheptaglycoléther, un alcool dodécyliqueheptaglycoléther ou un p-iso-nonylphénoldécaglycoléther.

15. Procédé selon l'une des revendications 1 à 8 et 14, caractérisé en ce qu'on chauffe le mélange d'eau et d'agents tensio-actifs à une température située environ 5°C au-dessus de la température de trouble d'un mélange pur d'eau et d'agent tensio-actif et qu'on sépare la phase riche en agents tensio-actifs et en azadirachtine, qui se forme après un certain temps.

16. Procédé selon l'une des revendications 1 à 15, caractérisé en ce qu'on formule le mélange riche en azadirachtine en y ajoutant des agents tensio-actifs ou de l'eau.

17. Procédé selon la revendication 16, caractérisé en ce qu'on ajoute de l'eau au mélange d'agents tensio-actifs riche en azadirachtine, à un rapport de 1 : 500 à 1: 5000.

18. Procédé selon l'une des revendications 1 à 8 ou 14 à 17, caractérisé en ce qu'on utilise un mélange d'agents tensio-actifs et de p-tert-octylphénol-7,5-glycoléther et de p-tert-octylphénol-8-10-glycoléther qui permet d'ajuster la température de trouble dans une plage plus grande.
